# EUROPÄISCHE PATENTSCHRIFT

(11) **EP 2 287 996 B1**
(45) Veröffentlichungstag und Bekanntmachung des Hinweises auf die Patenterteilung: **05.06.2013**
(21) Anmeldenummer: 10006321.3
(22) Anmeldetag: 18.06.2010
(51) Int. Cl.: H02J 13/00

(54) **Schalteinrichtung für ein Kraftfahrzeug**
Switching device for a motor vehicle
Dispositif de commutation pour un véhicule automobile

(30) Priorität: 29.07.2009 DE 102009035128
(43) Veröffentlichungstag der Anmeldung: 23.02.2011
(73) Patentinhaber: Audi AG, 85045 Ingolstadt (DE)
(72) Erfinder: Sedlmeier, Martin, 93336 Altmannstein (DE); Schneider, Gerhard, 85092 Kösching (DE)
(74) Vertreter: Thielmann, Frank

(56) Entgegenhaltungen:
- DE-A1- 10 160 169
- DE-A1- 19 947 965

## Beschreibung

Die Erfindung betrifft eine Schalteinrichtung für ein Kraftfahrzeug, umfassend einen Schalter mit einem Schaltkontakt und einer Beleuchtungseinrichtung und ein mit dem Schalter verbundenes Steuergerät, wobei der Schaltkontakt und die Beleuchtungseinrichtung parallel geschaltet sind und über eine gemeinsame Leitung mit dem Steuergerät verbunden sind.

Schalteinrichtungen der beschriebenen Art kommen in einem Kraftfahrzeug an unterschiedlichsten Positionen sowie zum Bedienen unterschiedlichster Gerätschaften zum Einsatz. Lediglich exemplarisch sind Schalteinrichtungen zum Bedienen der Fenster, der Klimaanlage, dessen Navigationssystems oder des Infotainmentsystems zu nennen, wobei diese Aufzählung nicht abschließend ist. Eine Schalteinrichtung der beschriebenen Art verfügt über einen Schalter, der vom Fahrer oder einer anderen im Fahrzeug befindlichen Person zu bedienen ist, wobei bei Betätigung des Schalters die jeweils zugeordnete Funktion am geschalteten Gerät (z. B. Fensterheber, Klimagerät, Lüftung etc.) über ein mit ihm kommunizierendes Steuergerät angesteuert bzw. ausgeführt wird. Der Schalter selbst verfügt neben dem eigentlichen Schaltkontakt, der zum Geben des Signals geöffnet oder geschlossen wird, üblicherweise über eine Beleuchtungseinrichtung, die zumeist als Suchbeleuchtung dient. Der Schalter wird also von innen beleuchtet.

Im Schalter selbst sind der Schaltkontakt und die Beleuchtungseinrichtung hintereinander geschaltet, beide liegen an Masse. Die Verbindung des Schaltkontakts und der Beleuchtungseinrichtung mit dem Steuergerät erfolgt über jeweils eine Leitung, d. h., es sind zwei separate Leitungen vorzusehen. Die Leitungslänge ist variabel, abhängig davon, wo im Fahrzeug der Schalter und wo das Steuergerät angeordnet ist. Der Einsatz zweier Leitungen ist mit beachtlichem Materialaufwand verbunden, im Hinblick auf die Vielzahl der im Fahrzeug verbauten Schalteinheiten resultiert hieraus auch ein beachtliches Gewicht.

Aus DE 199 47 965 A1 ist ein Bedienelement in Form eines Schalters oder Tasters für ein Kraftfahrzeug bekannt, umfassend einen aus Leitungen gebildeten, ein- oder zweiadrigen Anschluss für eine vom Bedienelement anzusteuernde Steuerungseinrichtung. Dem Bedienelement ist eine entweder in Reihe oder parallel geschaltete elektrische Zustandsanzeige in Form einer Leuchtdiode zugeordnet, die über die Steuerungseinrichtung ansteuerbar, insbesondere ein- und ausschaltbar.

Der Erfindung liegt damit das Problem zugrunde, eine Schalteinheit anzugeben, die demgegenüber vereinfacht aufgebaut ist.

Zur Lösung dieses Problems ist bei einer Schalteinrichtung der eingangs genannten Art erfindungsgemäß vorgesehen, dass dem Schaltkontakt ein Widerstand vorgeschaltet ist.

Die Parallelschaltung ermöglicht nun mit besonderem Vorteil, nur eine einzige gemeinsame Leitung zu nutzen, über die die Spannungsversorgung wie auch die Signalerfassung erfolgt. Dies führt dazu, dass bei nahezu allen Schalteinrichtung, die im Kraftfahrzeug verbaut sind, und bei denen der Schaltkontakt üblicherweise als selbstöffnender Taster ausgeführt ist, die bisher vorgesehene zweite Leitung entfallen kann, was zu einer beachtlichen Einsparung an Leitungslänge und damit Gewicht und einer Kostenreduktion führt.

Ist nur eine Beleuchtungseinrichtung vorgesehen, so handelt es sich bei dieser üblicherweise um eine Suchbeleuchtung. Sofern auch eine Funktionsbeleuchtung gefordert wird, über die der Schaltstatus des zugeordneten Geräts angezeigt werden soll (Funktionsbeleuchtung aus = Gerät aus, Funktionsbeleuchtung ein (z. B. rot) = Gerät ein), so ist zweckmäßigerweise eine zweite Beleuchtungseinrichtung vorgesehen, die bei der erfindungsgemäßen Schalteinrichtung der ersten Beleuchtungseinrichtung und damit zwangsläufig auch dem Schalter ebenfalls parallel geschaltet ist. D. h., dass dann drei Elemente parallel geschaltet sind. Die zweite Beleuchtungseinrichtung ist erfindungsgemäß mit einer anderen Betriebsspannung als die erste Beleuchtungseinrichtung betreibbar, so dass auch die erste und die zweite Beleuchtungseinrichtung über die eine gemeinsame Leitung gespeist bzw. betrieben werden können, d. h., dass Suchbeleuchtung und Funktionsbeleuchtung ebenfalls nur über eine Leitung bedient werden. Die Variation des Spannungsniveaus zum Betreiben entweder der ersten oder der zweiten Beleuchtungseinrichtung erfolgt über das Steuergerät, das je nach Situation die Spannung entsprechend variiert. Während bisher bei Verwendung zweier Beleuchtungseinrichtungen insgesamt drei Leitungen nötig waren, ist erfindungsgemäß auch hier nur eine Leitung ausreichend, um die Spannungsversorgung beider Beleuchtungseinrichtungen wie auch die Signalerfassung zu ermöglichen.

Bei den Beleuchtungseinrichtungen handelt es sich zweckmäßigerweise um LED's, wobei einer solchen LED, zweckmäßigerweise der LED, die die zweite Beleuchtungseinrichtung bildet, ein ihre Einschaltspannung veränderndes Bauelement, insbesondere eine Zenerdiode in Reihe geschaltet ist. Über diese Zenerdiode kann die Einschaltspannung der die zweite Beleuchtungseinrichtung darstellenden LED angehoben werden, da diese LED nur dann betrieben wird, wenn die nachgeschaltete Zenerdiode selbst in Durchlass geschaltet ist.

Die Erfindung sieht vor, dass dem Schaltkontakt ein Widerstand vorgeschaltet ist. Über diesen Widerstand wird vermieden, dass bei Betätigung des Schaltkontaktes ein vollständiger Kurzschluss einsetzt und die Spannung auf 0 V absinkt. Vielmehr sinkt die Spannung nur auf niedrigeres Spannungsniveau, d. h., dass nach wie vor eine Restspannung, deren Höhe von der Größe des Widerstands abhängig ist, anliegt, mithin also auch im Beleuchtungspfad anliegt. Die Beleuchtungseinrichtung, beispielsweise die LED, leuchtet weiter, lediglich etwas dunkler. Um diesen Helligkeitsverlust kompensieren zu können, sieht eine zweckmäßige Weiterbildung der Erfindung vor, dass über das Steuergerät die Strom- oder Spannungsversorgung der einen oder mehreren Beleuchtungseinrichtungen, insbesondere der LEDs, zur zumindest teilweisen Kompensation des durch die Betätigung des Schaltkontakts bedingten Helligkeitsverlusts variierbar ist. Bei LEDs erfolgt der Betrieb üblicherweise durch eine getaktete Stromversorgung, d. h., die Spannung wird wechselweise ein- und ausgeschaltet. Die Helligkeit wird durch das Taktverhältnis eingestellt. Um nun infolge des Absinkens der Spannung den Helligkeitsverlust auszugleichen, wird die Taktung verändert, d. h., dass eine längere Einschaltzeit und eine kürzere Ausschaltzeit eingestellt wird. Hierüber besteht die Möglichkeit, im Idealfall den Helligkeitsverlust vollständig zu kompensieren.

Häufig ist ein Schalter multifunktional, d. h., dass mehrere separate Einzelfunktionen über den einen Schalter betätigt werden können. Ein Beispiel ist ein vier-stufiger Fensterheber-Schalter, bei dem in einer ersten Tasterstellung das Fenster manuell geöffnet wird, in einer zweiten Tasterstellung das Fenster automatisch geöffnet wird, in einer dritten Stellung das Fenster manuell geschlossen wird und in einer vierten Tasterstellung das Fenster automatisch geschlossen wird. Um nun auch bei der erfindungsgemäßen Parallelschaltung diese Mehrstufigkeit realisieren zu können, sieht eine zweckmäßiger Weiterbildung der Erfindung vor, mehrere parallel geschaltete Schaltkontakte zu integrieren, denen jeweils ein unterschiedlicher Widerstand zugeordnet ist. Wie bereits zuvor beschrieben, führt die Zuordnung eines schaltkontaktspezifischen Widerstandes dazu, dass bei Betätigung des Schaltkontakts die Spannungen nicht auf 0 V, sondern nur auf niedrigeres Spannungsniveau sinkt. Das Spannungsniveau ist abhängig von der Größe des Widerstands. Werden nun den einzelnen separaten Schaltkontakten jeweils einzelne, separate und in ihrer Größe unterschiedliche Widerstände zugeordnet, so stellen sich je nach betätigtem Schaltkontakt unterschiedliche Restspannungen ein, die als Taster- oder als Schaltkontaktsignal gemessen und ausgewertet werden können. Hierüber kann ohne Weiteres ein mehrstufiger widerstandscodierter Schalter realisiert werden. Etwaige Helligkeitsverluste können in der zuvor beschriebenen Weise kompensiert werden. Grundlegend für die Funktion der erfindungsgemäßen Schalteinrichtung ist die Erfassung eines Spannungsabfalls bei Betätigung des oder eines Schaltkontakts. Liegt jedoch keine Spannung an, beispielsweise wenn die Schalterbeleuchtung oder die Funktionsbeleuchtung aus ist (je nachdem, ob die Tastfunktion mit der Such- oder Funktionsbeleuchtung gekoppelt ist), so kann auch keine Signalerzeugung über den Schaltkontakt erfolgen. Mitunter jedoch ist auch in diesen Fällen die Betätigung eines der Schalteinrichtung zugeordneten Geräts gewünscht, beispielsweise im Falle eines Fensterhebers bei ausgeschalteter Zündung. Um nun zu ermöglichen, dass auch bei ausgeschalteter Spannung eine Signalerfassung und damit eine Betätigung des Fensterhebers über die erfindungsgemäße Schalteinrichtung möglich ist, sieht eine zweckmäßige Weiterbildung der Erfindung vor, dass über das Steuergerät, wenn die Beleuchtung im Schalter ausgeschaltet ist und folglich diese Betriebsspannung nicht anliegt, eine Mindestspannung an den Schalter legbar ist, die kleiner als die Einschaltspannung der oder jeder schalterseitig vorgesehenen Beleuchtungseinrichtung ist. D. h., dass das Steuergerät auch immer dann, wenn die Beleuchtung des Schalters aus ist, z. B. über die Fahrzeugbatterie und das Bordnetz stets eine unterhalb der Einschaltspannung der LEDs liegende Spannung anliegt, so dass bei Betätigung des Schaltkontakts ein wenngleich geringerer Spannungsabfall detektiert werden kann. Dadurch, dass diese Spannung unterhalb der Einschaltspannung der LED liegt, wird vermieden, dass diese trotz ausgeschalteter Zündung leuchtet, gleichwohl aber die Signalerzeugung und -erfassung ermöglicht.

In diesem Zusammenhang ist es zweckmäßig, wenn die oder jede Beleuchtungseinrichtung eine LED ist, wobei der oder jeder LED ein die Einschaltspannung anhebendes Bauelement, insbesondere eine Zenerdiode, in Reihe geschaltet ist. Hierüber kann wie bereits beschrieben, die Einschaltspannung der jeweiligen LED auf ein hinreichend hohes Niveau angehoben werden, so dass auch die bei ausgeschalteter Zündung anliegende Spannung noch ein hinreichendes Niveau annehmen kann. Eine höhere Spannung hat den Vorteil, dass sie nicht extra generiert werden muss. So ist es beispielsweise möglich, dass eine solche Grundspannung bereits für den Betrieb eines auswertenden Mikrocontrollers gegeben ist, so dass dieses Spannungsniveau in diesem Sonderfall genutzt wird.

Kommen zwei Beleuchtungseinrichtungen in Form zweier parallel geschalteter LEDs mit parallelem Schaltkontakt zum Einsatz, die unterschiedliche Einschaltspannungen haben, so leuchten zwangsläufig beide LEDs, wenn die LED mit der höheren Einschaltspannung situationsbedingt betrieben werden soll. Denn die höhere Spannung liegt in beiden Beleuchtungspfaden an, so dass zwangsläufig auch die erste LED an ist. Um zu ermöglichen, dass nur die LED betrieben wird, die tatsächlich an sein soll, sieht eine zweckmäßige weitere Erfindungsalternative vor, zwei Beleuchtungseinrichtungen in Form parallel, jedoch entgegengesetzt geschalteter LED's und wenigstens einen zu beiden parallel geschalteten Schaltkontakt zu integrieren, wobei der Schaltkontakt und die erste LED über eine gemeinsame erste Leitung und der Schaltkontakt und die zweite LED über eine gemeinsame zweite Leitung mit dem Steuergerät verbunden sind, wobei bei Betrieb der einen Beleuchtungseinrichtung über die gemeinsame Leitung der anderen Beleuchtungseinrichtung der jeweilige Masseabschluss erfolgt.

Auch bei dieser Erfindungsausgestaltung ist jede Kombination aus einem Schaltkontakt und der Beleuchtungseinrichtung über eine gemeinsame Leitung mit dem Steuergerät verbunden. Kommt in der einfachsten Aufbaustufe nur ein Schaltkontakt zum Einsatz, so ist der Schaltkontakt und die erste Beleuchtungseinrichtung über eine erste gemeinsame Leitung mit dem Steuergerät gekoppelt, während die zweite Kombination aus dem einen Schaltkontakt und der zweiten Beleuchtungseinrichtung über eine zweite Leitung mit dem Steuergerät verbunden ist. Die LEDs sind jedoch einander entgegengesetzt geschaltet, d. h., dass bei Spannungsführung über die erste Leitung die zweite LED sperrt, während bei Spannungsführung über die zweite Leitung die erste LED sperrt. D. h., dass nur die jenige LED auch tatsächlich leuchtet, die leuchten soll. Die jeweils "nicht genutzte" Leitung respektive der entsprechende Pin am Steuergerät dient als Masseabschluss, d. h., dass je nachdem, welche LED leuchten soll, ein Wechsel der Masse erfolgt. Ein separater Masseabschluss, wie er über eine separate Masseleitung bei den zuvor beschriebenen Ausführungsformen benötigt wird, ist bei dieser Ausgestaltung nicht erforderlich, so dass eine diesbezüglich separate Leitung ebenfalls eingespart werden kann. Gleichwohl liegt auch dieser Ausgestaltung das erfindungsgemäße Basisprinzip zugrunde, einen Schaltkontakt und eine Beleuchtungseinrichtung parallel zu schalten und über eine gemeinsame Versorgungsleitung mit dem Steuergerät zu koppeln.

Ist nur eine Beleuchtungseinrichtung vorgesehen, so ist diese ebenfalls zweckmäßigerweise als LED ausgeführt.

Neben der Schalteinrichtung selbst betrifft die Erfindung ferner ein Kraftfahrzeug umfassend wenigstens eine Schalteinrichtung der beschriebenen Art.

Weitere Vorteile, Merkmale und Einzelheiten der Erfindung ergeben sich aus den im Folgenden beschriebenen Ausführungsbeispielen sowie anhand der Zeichnung. Dabei zeigen:
- Fig. 1: eine Prinzipdarstellung einer Schalteinrichtung einer nicht erfindungsgemäßen ersten Ausführungsform mit einer Beleuchtungseinrichtung,
- Fig. 2: eine Prinzipdarstellung einer Schalteinrichtung einer nicht erfindungsgemäßen zweiten Ausführungsform mit zwei Beleuchtungseinrichtungen,
- Fig. 3: eine Prinzipdarstellung einer Schalteinrichtung einer erfindungsgemäßen dritten Ausführungsform,
- Fig. 4: eine Prinzipdarstellung einer Schalteinrichtung einer nicht erfindungsgemäßen vierten Ausführungsform, und
- Fig. 5: ein Zeit-Spannungs-Diagramm zur Erläuterung des Betriebs der Schalteinrichtung aus Fig. 4.

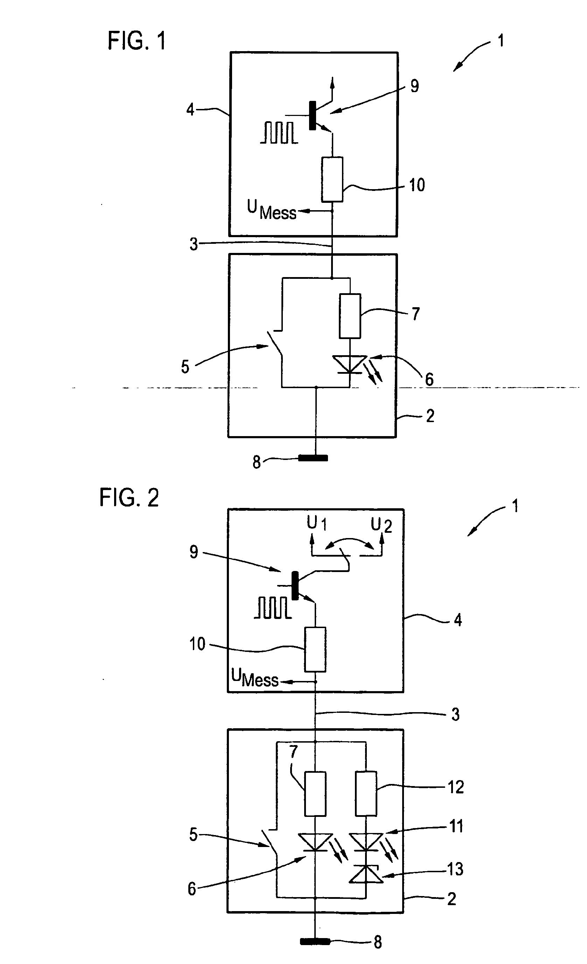

Fig. 1 zeigt eine nicht erfindungsgemäße Schalteinrichtung 1, umfassend einen Schalter 2 sowie ein mit diesem über eine einzige Leitung 3 verbundenes Steuergerät 4. Der Schalter 2 umfasst zum einen einen Schaltkontakt 5, bei dem es sich beispielsweise um einen Taster handelt, der bei Druckbetätigung schließt und bei Entlastung selbsttätig wieder öffnet. Beispielsweise kann es sich hierbei um einen Schalter zur Tankdeckelentriegelung oder ähnliches handeln.

Dem Schalter 5 ist eine Beleuchtungseinrichtung 6 in Form einer LED parallelgeschaltet. Der Beleuchtungseinrichtung 6 selbst ist ein Widerstand vorgeschaltet. Der Schalter 5 sowie die Beleuchtungseinrichtung 6 liegen beide an Masse 8.

Das Steuergerät selbst umfasst einen Transistor 9 sowie einen diesem nachgeschalteten Widerstand 10. Es ist, wenngleich nicht näher dargestellt, mit einer Spannungsversorgung sowie mit dem über die Schalteinrichtung 1 anzusteuernden Gerät verbunden.

Beim Betätigen des Schalters 5, wenn dieser also geschlossen wird, kommt es zu einem Kurzschluss im Schalter 2 bzw. im Beleuchtungspfad. Die Spannung an der gemeinsamen Leitung 3, die sowohl als Signal- als auch als Beleuchtungsleitung dient, fällt kurzschlussbedingt auf 0V ab, infolge der fehlenden Betriebsspannung geht zwangsläufig die Beleuchtungseinrichtung 6 aus. Der Spannungsabfall seinerseits kann im Steuergerät 4, das kontinuierlich die Signal- oder Messspannung U_{Mess} erfasst, detektiert werden, d. h., der Kurzschluss (U_{Mess} = 0V) wird vom Steuergerät als Schaltbefehl ausgewertet, da der Spannungsabfall zwingend mit einem Schließen des Schalters 5 und damit einer gewollten Betätigung und einer gewünschten Ansteuerung des nachgeschalteten Geräts verbunden ist.

Sobald der Schaltkontakt 5 wieder entlastet wird, wenn also nicht mehr auf den Schalter bzw. Taster gedrückt wird, öffnet sich dieser automatisch, der Kurzschluss wird wieder aufgehoben und die Spannung liegt wieder an der gemeinsamen Leitung 3 und damit auch der Beleuchtungseinrichtung 6 an, die wieder leuchtet.

Eine weitere nicht erfindungsgemäße Schalteinrichtung 1, deren Funktion hinsichtlich der Signalerfassung über den erzeugten Kurzschluss entsprechend der der in Fig. 1 beschriebenen Schalteinrichtung 1 ist, ist in Fig. 2 gezeigt, wobei für gleiche Bauteile gleiche Bezugszeichen verwendet werden. Auch diese umfasst einen Schalter 2, eine Steuerungseinrichtung 4 sowie eine den Schalter 2 und die Steuerungseinrichtung 4 verbindende gemeinsame Leitung 3. Im Schalter 2 ist wiederum der Schaltkontakt 5, die Beleuchtungseinrichtung 6 in Form der LED sowie der vorgeschaltete Widerstand 7 vorgesehen. Weiterhin ist eine ebenfalls parallel geschaltete zweite Beleuchtungseinrichtung 11, ebenfalls eine LED, sowie ein ihr vorgeschalteter weiterer Widerstand 12 vorgesehen. Während die erste Beleuchtungseinrichtung 6 beispielsweise als Suchbeleuchtung dient, die automatisch beispielsweise beim Einschalten der Außenbeleuchtung angeschaltet wird und den Schalter optisch kennzeichnet, dient die zweite Beleuchtungseinrichtung 11 als Funktionsbeleuchtung, die den Schaltzustand oder Betriebszustand des nachgeschalteten, angesteuerten Geräts anzeigt. Beispielsweise handelt es sich bei der Schalteinrichtung 1 um eine solche zur Bedienung eines Fahrerassistenzsystems wie beispielsweise eines Spurwechselassistenzsystems. Wenn dieses durch Betätigen des Schalters 2, also durch Schließen des Schaltkontakts 5 angeschaltet wird, so wird dies nach erneutem Öffnen des Schalters 2 durch die dann betriebene zweite Beleuchtungseinrichtung 11, die beispielsweise den Schalter rot hinterleuchtet, angezeigt.

Um nun sicherzustellen, dass die zweite Beleuchtungseinrichtung 11 nur dann betrieben wird, wenn dies nötig ist, ist die Einschaltspannung der Beleuchtungseinrichtungen 6, 11 unterschiedlich. Um dies auf einfache Weise zu realisieren ist im gezeigten Ausführungsbeispiel der zweiten Beleuchtungseinrichtung 11 ein Bauelement, das der Spannungserhöhung dient, nachgeschaltet, im vorliegenden Fall eine Zenerdiode 13. Diese ist entgegengesetzt zur zweiten Beleuchtungseinrichtung 11 geschaltet. D. h., dass zum Betrieb der zweiten Beleuchtungseinrichtung 11 eine höhere Einschaltspannung benötigt wird als zum Betrieb der ersten Beleuchtungseinrichtung 6.

Die Spannung wird wie beschrieben über das Steuergerät zur Verfügung gestellt, das hier ebenfalls den Transistor 9 sowie den Widerstand 10 umfasst und das über den Transistor 9 in der Lage ist, unterschiedliche Versorgungs- oder Einschaltspannungen, im gezeigten Beispiel mit U₁ (z. B. die niedrigere Versorgungsspannung) und U₂ (die höhere Versorgungsspannung) dargestellt ist. Je nach Schaltzustand des mit dem Steuergerät 4 gekoppelten Geräts wird also entweder die erste Versorgungsspannung U₁ oder die zweite Versorgungsspannung U₂ über die gemeinsame Leitung 3 auf die Parallelschaltung im Schalter 2 gegeben und die jeweilige Beleuchtungseinrichtung betrieben.

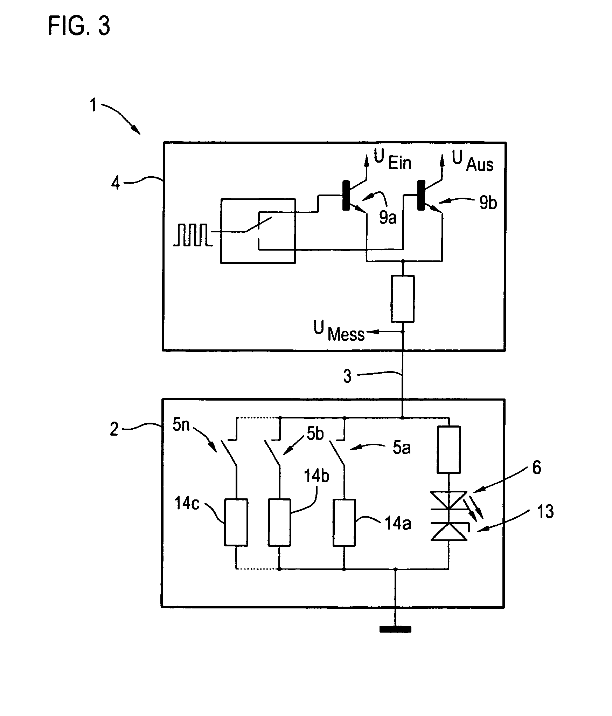

Fig. 3 zeigt eine Ausführungsform einer erfindungsgemäßen Schalteinrichtung 1, wobei auch hier gleiche Bezugszeichen für gleiche Bauteile verwendet werden. Sie umfasst wiederum einen Schalter 2, eine Steuerungseinrichtung 4 sowie eine den Schalter 2 und die Steuerungseinrichtung 4 verbindende gemeinsame Leitung 3. Im Schalter ist die Beleuchtungseinrichtung 6 sowie die ihr nachgeschaltete Zenerdiode 13 vorgesehen, die der Erhöhung der Einschaltspannung der Beleuchtungseinrichtung 6, also der LED, dient. Vorgesehen sind im gezeigten Beispiel ferner mehrere einzelne Schaltkontakte 5a, 5b, 5n, d. h., es können beliebig viele einzelne Schaltkontakte vorgesehen sein. Bevorzugt sind maximal vier Schaltkontakte integriert, beispielsweise bei Ausführung der Schalteinrichtung 1 als Fensterheberschalter. Jedem Schaltkontakt 5a - 5n ist ein separater Widerstand 14a, 14b, 14n zugeordnet, wobei die Widerstände 14a - 14n allesamt in ihrer Größe unterschiedlich sind. Über diese Widerstände 14a - 14n wird erreicht, dass bei Betätigung des jeweils zugeordneten Schaltkontakts 5a - 5n die abgreifbare Signal- oder Messspannung U_{Mess} nicht auf 0 V absinkt, d. h., es wird kein vollständige Kurzschluss generiert. Vielmehr stellt sich über den im jeweiligen Schalterpfad integrierten Widerstand 14a - 14n eine Restspannung ein, die an der Beleuchtungseinrichtung 6, also der LED, nach wie vor anliegt. Die Höhe dieser Restspannung ist von der Größe des jeweiligen schaltkontaktsspezifischen Widerstands abhängig. Diese Ausführungsform ist dahingehend von Vorteil, als zum einen ein widerstandscodierter Schalter 2 aufgebaut werden kann. Denn das Messsignal, das abgegriffen wird, ist in seiner Höhe abhängig vom jeweiligen Widerstand, der dem betätigten Schaltkontakt zugeordnet ist, so dass eindeutig identifiziert werden kann, welcher Schaltkontakt 5a - 5n betätigt wurde und die zugeordnete Funktion angesteuert werden kann. Darüber hinaus bleibt auch die Beleuchtungseinrichtung 6 angeschaltet, solange die Restspannung über der Einschaltspannung liegt, wenngleich die Beleuchtungseinrichtung 6 gegebenenfalls etwas dunkler leuchtet. Eine Kompensation ist darüber möglich, dass die Taktung des Betriebsstroms der Beleuchtungseinrichtung 6 variiert wird. Eine LED wird üblicherweise dadurch betrieben, dass alternierend die Spannung ein- und ausgeschaltet wird. Über das Taktverhältnis wird die Helligkeit variiert. Sinkt nun die Spannung, so kann dieser Spannungsabfall über die Veränderung des Taktes hin zu einer längeren Einschaltdauer zumindest teilweise, im Idealfall vollständig kompensiert werden.

Wie Fig. 3 zu entnehmen ist, sind im Steuergerät 4 zwei separate Transistoren 9a, 9b vorgesehen. Über diese Transistoren 9a, 9b können unterschiedliche Betriebsspannungen vom Steuergerät 4 an den Schalter 2 gegeben werden, nämlich eine erste Betriebsspannung Uₑᵢₙ, die angelegt wird, wenn das Kraftfahrzeug, in das die Schalteinrichtung 1 eingebaut ist, betrieben wird, mithin also die Zündung eingeschaltet ist. Die zweite, demgegenüber niedrigere Spannung Uₐᵤₛ wird dann über das Steuergerät 4 angelegt, wenn die Zündung ausgeschaltet ist. Diese zweite Spannung Uₐᵤₛ liegt unterhalb der Einschaltspannung der Beleuchtungseinrichtung 6, also der LED. Gleichwohl liegt am Schalter 2 die niedrigere Spannung Uₐᵤₛ an. Dies führt dazu, dass auch bei ausgeschaltetem Kraftfahrzeug respektive ausgeschalteter Zündung bei Betätigung eines Schaltkontaktes (und hierbei kommt es nicht darauf an, ob nur ein Schaltkontakt oder ob mehrere Schaltkontakte wie in Fig. 3 gezeigt vorgesehen sind) in jedem Fall ein Spannungsabfall erfasst werden kann, da eben eine Grundspannung, nämlich die Spannung Uₐᵤₛ anliegt und seitens des Steuergeräts 4 eine Signal- oder Messspannung U_{Mess} abgegriffen werden kann. Auch diese ist bei Verwendung mehrerer Schaltkontakte 5a - 5n mit zugeordneten Widerständen 14a - 14n in ihrer Höhe schaltkontaktspezifisch, so dass eine eindeutige Kontaktzuordnung auch bei ausgeschalteter Zündung möglich ist. Dies bietet die Möglichkeit, beispielsweise einen Fensterheber auch dann ansteuern zu können, wenn die Zündung aus ist. Das Niveau der zweiten Spannung Uₐᵤₛ kann beispielsweise dem einer Versorgungsspannung für den hier nicht näher gezeigten Mikrocontroller, der im Steuergerät 4 die Signal- oder Messspannung U_{Mess} auswertet, liegen, so dass hierfür keine separate Spannung generiert werden muss.

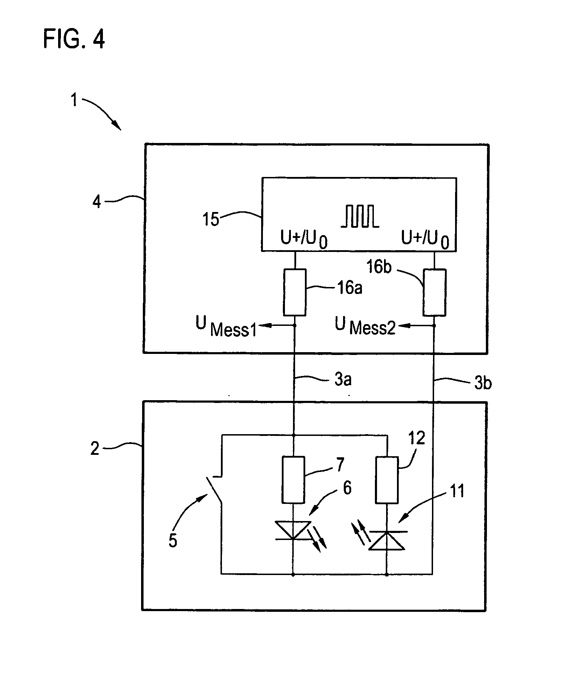

Fig. 4 zeigt schließlich eine nicht erfindungsgemäße Schalteinrichtung 1, wiederum umfassend einen Schalter 2 und ein Steuergerät 4, wobei im Schalter 2 ein Schaltkontakt 5, eine erste Beleuchtungseinrichtung 6 in Form einer LED sowie eine zweite Beleuchtungseinrichtung 11 ebenfalls in Form einer LED integriert sind. Jeder LED ist wiederum ein entsprechender Widerstand 7, 12 zugeordnet. Ersichtlich sind der Schaltkontakt 5 sowie die beiden Beleuchtungseinrichtungen 6 und 11 parallel geschaltet, jedoch sind die beiden LEDs entgegengesetzt geschaltet.

Im Steuergerät 4, das insoweit die zur Spannungsversorgung und zur Auswertung benötigten Komponenten umfasst, die hier nicht näher gezeigt sind, ist lediglich als Prinzipdarstellung die Spannungsversorgung 15 gezeigt, der ein erster Widerstand 16a und ein zweiter Widerstand 16b nachgeschaltet ist. Vom Widerstand 16a führt über einen entsprechenden ersten Anschlusspin eine erste gemeinsame Leitung 3a zum Schalter 2, vom zweiten Widerstand 16b führt über einen entsprechenden zweiten Pin eine zweite gemeinsame Leitung 3b zum Schalter 2. Über beide Widerstände 16a, 16b sowie die Leitungen 3a, 3b kann separat eine Betriebs- oder Versorgungsspannung an den Schalter 2 angelegt werden. Infolge der Leitungsführung und der einander entgegengesetzten Schaltung der LEDs 6 und 11 ist es nun möglich, nur eine der beiden Beleuchtungseinrichtungen zu betreiben.

Wird die Spannung über die Leitung 3a geführt, so wird die Beleuchtungseinrichtung 6 betrieben. Die zweite LED 11 ist infolge ihrer entgegengesetzten Schaltung gesperrt. Über die zweite Leitung 3b erfolgt der Masseabschluss, d. h., dass hierüber der Schalter 2 auf Masse liegt. Eine separate Masseleitung, wie sie bei den zuvor beschriebenen Ausgestaltungen benötigt wird, ist hier nicht erforderlich.

Im umgekehrten Fall, wenn über die zweite Leitung 3b die Spannung geführt ist, wird die zweite LED 11, die dann in Durchlassrichtung geschaltet ist, betrieben und leuchtet, während die erste LED 6 infolge ihrer entgegengesetzten Schaltung sperrt. In diesem Fall erfolgt der Masseabschluss über die Leitung 3a. D. h., dass bei dieser Schalterausgestaltung eine wechselnde Masse realisiert ist, nachdem der Masseabschluss jeweils über die Leitung, über die die Spannung gerade nicht geführt wird, erfolgt. Dies ermöglicht es nun, je nach Situation nur tatsächlich die benötigte LED anzusteuern.

In jedem Fall kann aber über den Schaltkontakt 5 ein Singal gegeben werden, da seine Betätigung unabhängig davon, welche LED gerade leuchtet, stets zu einem Spannungsabfall führt, der als U_{Mess} erfasst und als Steuersignal erkannt werden kann.

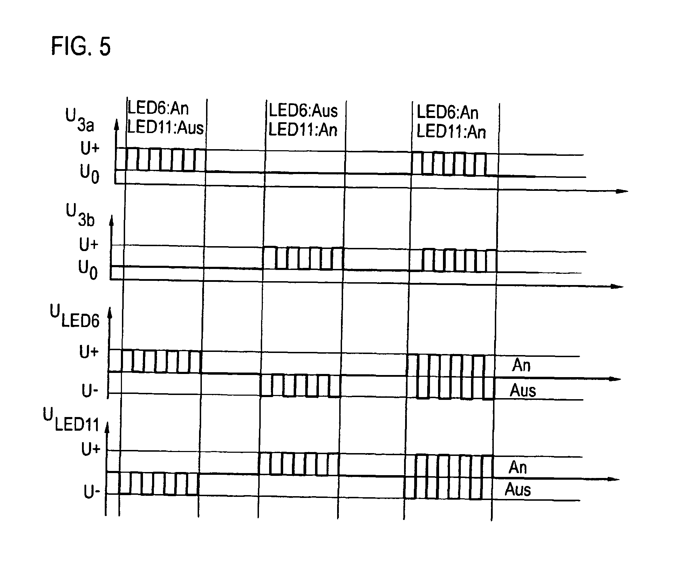

In Fig. 5 ist ein entsprechendes Spannungsdiagramm dargestellt, wobei die jeweils über die Leitung 3a geführte Spannung als U₃ₐ und die über die Leitung 3b geführte Spannung als U_{3b} angegeben ist. Die jeweils getaktet gegebene Spannung variiert zwischen U₀ und U₊. Die jeweilige LED ist in Fig. 5 mit "LED 6" bzw. "LED 11" gekennzeichnet.

Ersichtlich ergibt sich je nachdem, über welche Leitung 3a, 3b die Versorgungsspannung geführt wird, entweder, dass nur die LED 6 an ist und die LED 11 aus ist (siehe die beiden oberen Spannungsdiagramme links), nämlich wenn die Spannung über die Leitung 3a geführt ist, oder bei Führung der Spannung über die Leitung 3b, dass die LED 6 aus ist und die LED 11 an (in den beiden Diagrammen in der Mitte), oder dass bei Führung der Spannung sowohl über die Leitung 3a als auch über die Leitung 3b beide LEDs an sind (im Diagramm rechts).

In entsprechender Weise verhält sich die an der jeweiligen LED 6 und 11 anliegende Spannung, wie in den beiden unteren Diagrammkurven gezeigt ist.

## Patentansprüche

1. Schalteinrichtung für ein Kraftfahrzeug, umfassend einen Schalter mit wenigstens einem Schaltkontakt (5) und einer Beleuchtungseinrichtung (6) und ein mit dem Schalter verbundenes Steuergerät (4), wobei der Schaltkontakt (5) und die Beleuchtungseinrichtung (6) parallel geschaltet sind und über eine gemeinsame Leitung (3) mit dem Steuergerät (4) verbunden sind,
**dadurch gekennzeichnet,**
**dass** dem Schaltkontakt (5a, 5b, ..., 5n) ein Widerstand (14a, 14b, ..., 14n) vorgeschaltet ist.

2. Schalteinrichtung nach Anspruch 1,
**dadurch gekennzeichnet,**
**dass** eine zweite Beleuchtungseinrichtung (11) vorgesehen ist, die der ersten Beleuchtungseinrichtung (6) parallel geschaltet und mit einer anderen Betriebsspannung als die erste Beleuchtungseinrichtung (6) betreibbar ist.

3. Schalteinrichtung nach Anspruch 1 oder 2,
**dadurch gekennzeichnet,**
**dass** die eine oder die beiden Beleuchtungseinrichtungen (6, 11) LED's sind.

4. Schalteinrichtung nach Anspruch 3,
**dadurch gekennzeichnet,**
**dass** bei Verwendung von zwei Beleuchtungseinrichtungen (6, 11) einer LED ein ihre Einschaltspannung veränderndes Bauelement, insbesondere eine Zenerdiode (13), in Reihe geschaltet ist.

5. Schalteinrichtung nach einem der vorangehenden Ansprüche ,
**dadurch gekennzeichnet,**
**dass** über das Steuergerät (4) die Strom- oder Spannungsversorgung der einen oder mehreren Beleuchtungseinrichtungen (6, 11), insbesondere der LED's, zur zumindest teilweisen Kompensation des durch die Betätigung des Schaltkontakts (5a, 5b, ..., 5n) bedingten Helligkeitsverlusts variierbar ist.

6. Schalteinrichtung nach einem der vorangehenden Ansprüche,
**dadurch gekennzeichnet,**
**dass** mehrere parallel geschaltete Schaltkontakte (5a, 5b, ..., 5n) vorgesehen ist, denen jeweils ein unterschiedlicher Widerstand (14a, 14b, ..., 14n) zugeordnet ist.

7. Schalteinrichtung nach einem der vorangehenden Ansprüche,
**dadurch gekennzeichnet,**
**dass** über das Steuergerät (6), wenn die die oder jede Beleuchtungseinrichtung im Schalter ausgeschaltet ist, eine Mindestspannung an den Schalter (2) legbar ist, die kleiner als die Einschaltspannung der oder jeder schalterseitig vorgesehenen Beleuchtungseinrichtung (6, 11) ist.

8. Schalteinrichtung nach Anspruch 7,
**dadurch gekennzeichnet,**
**dass** die oder jede Beleuchtungseinrichtung (6, 11) eine LED ist, wobei der oder jeder LED ein die Einschaltspannung anhebendes Bauelement, insbesondere eine Zenerdiode (13), in Reihe geschaltet ist.

9. Schalteinrichtung nach einem der vorangehenden Ansprüche,
**dadurch gekennzeichnet,**
**dass** zwei Beleuchtungseinrichtungen (6, 11) in Form parallel, jedoch entgegengesetzt geschalteter LED's und wenigstens ein zu beiden parallel geschalteter Schaltkontakt (5) vorgesehen ist, wobei der Schaltkontakt (5) und die erste LED (6) über eine gemeinsame erste Leitung (3a) und der Schaltkontakt (5) und die zweite LED (11) über eine gemeinsame zweite Leitung (3b) mit dem Steuergerät (4) verbunden sind, wobei bei Betrieb der einen Beleuchtungseinrichtung über die gemeinsame Leitung der anderen Beleuchtungseinrichtung der jeweilige Masseabschluss erfolgt.

10. Kraftfahrzeug umfassend wenigstens eine Schalteinrichtung (1) nach einem der vorangehenden Ansprüche.

## Claims

1. Switching device for a motor vehicle, comprising a switch having at least one switching contact (5), an illuminating device (6) and a control unit (4) which is connected to the switch, the switching contact (5) and the illuminating device (6) being connected in parallel and being connected to the control unit (4) via a common line (3), **characterised in that** a resistor (14a, 14b, ... , 14n) is connected upstream of the switching contact (5a, 5b, ..., 5n).

2. Switching device according to claim 1, **characterised in that** a second illuminating device (11) is provided which is connected in parallel with the first illuminating device (6) and can be operated at a different operating voltage to the first illuminating device (6).

3. Switching device according to either claim 1 or claim 2, **characterised in that** the one illuminating device or the two illuminating devices (6, 11) is/are LEDs.

4. Switching device according to claim 3, **characterised in that**, when using two illuminating devices (6, 11) of an LED, a component which changes its switch-on voltage, in particular a Zener diode (13), is connected in series.

5. Switching device according to any of the preceding claims, **characterised in that** the current or voltage supply to the one or more illuminating devices (6, 11), in particular to the LEDs, can be varied via the control unit (4) for compensating at least in part the loss of brightness caused by the actuation of the switching contact (5a, 5b, ..., 5n).

6. Switching device according to any of the preceding claims, **characterised in that** a plurality of switching contacts (5a, 5b, ..., 5n) which are connected in parallel are provided, to each of which a different resistor (14a, 14b, ..., 14n) is assigned.

7. Switching device according to any of the preceding claims, **characterised in that**, when the or each illuminating device is switched off in the switch, a minimum voltage can be applied to the switch (2) via the control unit (4), which voltage is less than the switch-on voltage of the or of each illuminating device (6, 11) provided on the switch side.

8. Switching device according to claim 7, **characterised in that** the or each illuminating device (6, 11) is an LED, a component which raises the switch-on voltage, in particular a Zener diode (13), being connected in series to the or each LED.

9. Switching device according to any of the preceding claims, **characterised in that** two illuminating devices (6, 11) in the form of LEDs which are connected in parallel but opposite one another and at least one switching contact (5) which is connected in parallel with the two devices are provided, the switching contact (5) and the first LED (6) being connected to the control unit (4) via a common first line (3a) and the switching contact (5) and the second LED (11) being connected to the control unit via a common second line (3b), the respective earth termination being implemented via the common line of one illuminating device when the other illuminating device is in operation.

10. Motor vehicle comprising at least one switching device (1) according to any of the preceding claims.

## Revendications

1. Dispositif de commutation pour un véhicule automobile, comprenant un commutateur avec au moins un contact de commutation (5) et un dispositif d'éclairage (6) ainsi qu'un appareil de commande (4) connecté au commutateur, dans lequel le contact de commutation (5) et le dispositif d'éclairage (6) sont montés en parallèle et sont connectés à l'appareil de commande (4) via une ligne commune (3),
**caractérisé en ce que**
une résistance (14a, 14b, ..., 14n) est montée en amont du contact de commutation (5a, 5b, ..., 5n).

2. Dispositif de commutation selon la revendication 1,
**caractérisé en ce que**
il est prévu un second dispositif d'éclairage (11), qui est monté en parallèle avec le premier dispositif d'éclairage (6) et peut être actionné avec une autre tension d'exploitation que le premier dispositif d'éclairage (6).

3. Dispositif de commutation selon la revendication 1 ou la revendication 2,
**caractérisé en ce que**
le ou les deux dispositifs d'éclairage (6, 11) est ou sont une ou des diodes électroluminescentes (DEL).

4. Dispositif de commutation selon la revendication 3,
**caractérisé en ce que**,
lors de l'utilisation de deux dispositifs d'éclairage (6, 11), il est monté, en série avec une DEL, un composant modifiant sa tension de connexion, en particulier une diode Zener (13).

5. Dispositif de commutation selon l'une quelconque des revendications précédentes,
**caractérisé en ce que**,
via l'appareil de commande (4), l'alimentation en courant ou en tension du un ou plusieurs dispositifs d'éclairage (6, 11), en particulier des DEL, peut être modifiée par compensation au moins partielle de la perte de luminosité conditionnée par la commande du contact de commutation (5a, 5b, ..., 5n).

6. Dispositif de commutation selon l'une quelconque des revendications précédentes,
**caractérisé en ce que**
il est prévu plusieurs contacts de commutation (5a, 5b, ..., 5n) montés en parallèle, auxquels est respectivement affectée une résistance différente (14a, 14b, ..., 14n).

7. Dispositif de commutation selon l'une quelconque des revendications précédentes,
**caractérisé en ce que**, via l'appareil de commande (4), si le ou chaque dispositif d'éclairage est déconnecté dans le commutateur, une tension minimale peut être appliquée au commutateur (2), qui est plus petite que la tension de connexion du ou de chaque dispositif d'éclairage (6, 11) prévu côté commutateur.

8. Dispositif de commutation selon la
revendication 7, **caractérisé en ce que** le ou chaque dispositif d'éclairage (6, 11) est une
DEL, dans lequel un composant élevant la tension de connexion, en particulier une diode Zener (13), est monté en série avec la ou chaque DEL.

9. Dispositif de commutation selon l'une quelconque des revendications précédentes,
**caractérisé en ce que**
il est prévu deux dispositifs d'éclairage (6, 11) sous la forme de DEL montées en parallèle, mais en opposition, et au moins un contact de commutation (5) monté en parallèle avec les deux, dans lequel le contact de commutation (5) et la première DEL (6) sont connectés, via une première ligne commune (3a), et le contact de commutation (5) et la seconde DEL (11), via une seconde ligne commune (3b), avec l'appareil de commande (4), dans lequel, lors du fonctionnement du premier dispositif d'éclairage, il se produit, via la ligne commune de l'autre dispositif d'éclairage, la déconnexion respective de la masse.

10. Véhicule automobile comprenant au moins un dispositif de commutation (1) selon l'une quelconque des revendications précédentes.
